# EUROPÄISCHE PATENTANMELDUNG

(11) **EP 4 841 299 A1**
(43) Veröffentlichungstag der Anmeldung: **18.11.2026**
(21) Anmeldenummer: 25176093.0
(22) Anmeldetag: 13.05.2025
(51) Int. Cl.: G01S 7/534, G01S 15/32, G01S 15/87, G01S 15/931

(54) **VERFAHREN ZUM BETRIEB EINER ULTRASCHALLSENSORVORRICHTUNG SOWIE EINE SOLCHE ULTRASCHALLSENSORVORRICHTUNG**

(71) Anmelder: Elmos Semiconductor SE, 51379 Leverkusen (DE)
(72) Erfinder: WILLE, Dennis, 30559 Hannover (DE)
(74) Vertreter: dompatent

(57) **Zusammenfassung**

Verfahren zum Betrieb einer Ultraschallsensorvorrichtung, insbesondere für ein Kraftfahrzeug, mit einem ersten Ultraschalltransducer und einem zweiten Ultraschalltransducer, wobei der erste Ultraschalltransducer und der zweite Ultraschalltransducer eine Resonanzfrequenz *f*₀ aufweisen, wobei das Verfahren die Schritte umfasst: Erzeugen eines ersten Ultraschallsignals mit einer ersten Frequenz *f*₁ für eine erste Zeitdauer mittels dem ersten Ultraschalltransducer und Erzeugen eines zweiten Ultraschallsignals mit einer zweiten Frequenz *f*₂ für eine zweite Zeitdauer mittels dem zweiten Ultraschalltransducer, wobei die erste Frequenz *f*₁ und die zweite Frequenz *f*₂ zumindest zu einem Zeitpunkt einen unterschiedlichen Frequenzabstand zu der Resonanzfrequenz *f*₀ aufweisen und Empfangen des ersten Ultraschallsignals, welches an einem Objekt in einem Erfassungsbereich der Ultraschallsensorvorrichtung reflektiert wird, durch den ersten Ultraschalltransducer und/oder den zweiten Ultraschalltransducer oder Empfangen des zweiten Ultraschallsignals, welches an einem Objekt in dem Erfassungsbereich der Ultraschallsensorvorrichtung reflektiert wird, durch den ersten Ultraschalltransducer und/oder den zweiten Ultraschalltransducer.

## Beschreibung

Die vorliegende Erfindung betrifft ein Verfahren zum Betrieb einer Ultraschallsensorvorrichtung insbesondere für ein Kraftfahrzeug zur Erkennung eines Objekts in einem Erfassungsbereich der Ultraschallsensorvorrichtung beispielsweise als Einparkhilfe für das Kraftfahrzeug. Weiterhin betrifft die vorliegende Erfindung eine Vorrichtung zur Implementierung eines solchen Verfahrens sowie eine Ultraschallvorrichtung. Weiterhin betrifft die vorliegende Erfindung ein computerlesbares Speichermedium.

Der Erkennung eines Hindernisses im Umfeld insbesondere eines Fahrzeugs mit Hilfe der Analyse eines empfangenen Echosignals von zuvor ausgesendeten Ultraschallwellen ist grundsätzlich bekannt. Derartige Verfahren haben sich bei automobilen Anwendungen als beispielsweise Einparkhilfe bewährt.

Bei solchen Verfahren wird üblicherweise ein Ultraschalltransducer verwendet, der angeregt wird zum Aussenden eines Ultraschallsignals in den zu überwachenden Erfassungsbereich. Das Ultraschallsignal wird sodann von einem Hindernis oder Objekt im Erfassungsbereich reflektiert und gelangt hierdurch zurück zu dem Ultraschalltransducer. Durch das reflektierte Ultraschallempfangssignal wird sodann der Ultraschalltransducer angeregt, wobei die Anregung des Ultraschalltransducers als Messsignal herangezogen wird zur Erkennung des Hindernisses bzw. Objekts im Erfassungsbereich.

Soll der Erfassungsbereich vergrößert werden, ist es unter Umständen erforderlich mehrere Ultraschalltransducer beabstandet zueinander vorzusehen zur sensorischen Abdeckung des Erfassungsbereichs. Hierbei besteht die Möglichkeit die einzelnen Ultraschalltransducer konsekutiv anzuregen und entsprechend ein reflektiertes Ultraschallsignal zu empfangen. Hierdurch entsteht jedoch insbesondere bei Vorsehen mehrerer Ultraschalltransducer ein langer Messzyklus, in dem stets nur ausgewählte Bereiche des Erfassungsbereichs erfasst werden können. Insbesondere muss ein Ultraschalltransducer warten, bis ein vorhergehender Ultraschalltransducer seine Messung vollständig abschließt, bevor dieser Ultraschalltransducer mit seiner Messung beginnen kann. Dies führt zu einer ineffizienten Nutzung der Hardware durch lange Totzeiten einzelner Ultraschalltransducer.

Alternativ hierzu ist es möglich die Ultraschalltransducer mit unterschiedlichen Frequenzen anzuregen, so dass ein reflektiertes Ultraschallsignal anhand seiner Frequenz einem bestimmten Ultraschalltransducer zugeordnet werden kann. Hierdurch können Kreuzmessungen ermöglicht, d.h. Messungen eines reflektierten Ultraschallsignals durch den Ultraschalltransducer, welcher das Ultraschallsignal erzeugt hat, als auch durch einen weiteren, benachbarten Ultraschalltransducer. Hierdurch ist eine gleichzeitige Messung durch mehrere Ultraschalltransducer möglich. Dabei wird im Stand der Technik und insbesondere DE 10 2017 104 145 vorgeschlagen, dass die beiden Frequenzen einen identischen Abstand zu einer Resonanzfrequenz der Ultraschalltransducer aufweist. Hierdurch ist sichergestellt, dass die beiden Ultraschallsignale eine nahezu identische Amplitude aufweisen auf Grund des symmetrisch angenommenen Verstärkungsprofils der einzelnen Ultraschalltransducer.

Weiterhin weisen bekannte Vorrichtungen und Verfahren zur Erkennung eines Objekts in einem Erfassungsbereich eines Ultraschalltransducers das Problem auf, dass einerseits ausgesendete Ultraschallwellen ausreichend stark sein müssen, d.h. eine ausreichende Amplitude aufweisen müssen, um auch Objekte bzw. Hindernisse in größerem Abstand zu dem Ultraschalltransducer detektieren zu können. Gleichzeitig sollen jedoch auch Objekte im Nahbereich des Ultraschalltransducers detektierbar sein. Ist jedoch hierfür das ausgesendet Ultraschallsignal zu stark, kann es zu Mehrfachreflektionen zwischen dem Objekt im Nahbereich des Ultraschalltransducers und dem Ultraschalltransducer bzw. dem Fahrzeug selbst kommen, so dass es zu einem Übersteuern des Ultraschalltransducers kommt.

Aufgabe der vorliegenden Erfindung ist es ein Verfahren zum Betrieb einer Ultraschallsensorvorrichtung bereitzustellen, welches den gleichzeitigen Betrieb von mehr als einem Ultraschalltransducers ermöglicht und die zuverlässige Detektion von Objekten im Nahbereich sowie Fernbereich des Ultraschalltransducers ermöglicht.

Die Aufgabe wird gelöst durch ein Verfahren gemäß Anspruch 1, eine Vorrichtung gemäß Anspruch 13, eine Ultraschallsensorvorrichtung gemäß Anspruch 14 sowie ein computerlesbares Speichermedium gemäß Anspruch 15.

In einem ersten Aspekt der vorliegenden Erfindung wird ein Verfahren zum Betrieb einer Ultraschallsensorvorrichtung bereitgestellt, insbesondere für ein Kraftfahrzeug, beispielsweise als Einparkhilfe. Die Ultraschallsensorvorrichtung weist dabei einen ersten Ultraschalltransducer und einen zweiten Ultraschalltransducer auf, wobei der erste Ultraschalltransducer und der zweite Ultraschalltransducer eine Resonanzfrequenz *f*₀ aufweisen. Das Verfahren weist dabei die Schritte auf:
Erzeugen und Aussenden eines ersten Ultraschallsignals mit einer ersten Frequenz *f*₁ für eine erste Zeitdauer mittels dem ersten Ultraschalltransducer und Erzeugen eines zweiten Ultraschallsignals mit einer zweiten Frequenz *f*₂ für eine zweite Zeitdauer mittels dem zweiten Ultraschalltransducer, wobei die erste Frequenz *f*₁ und die zweite Frequenz *f*₂ zumindest zu einem Zeitpunkt einen unterschiedlichen Frequenzabstand zu der Resonanzfrequenz *f*₀ aufweisen, und
Empfangen des ersten Ultraschallsignals, welches an einem Objekt in einem Erfassungsbereich der Ultraschallsensorvorrichtung reflektiert wird, durch den ersten Ultraschalltransducer und/oder den zweiten Ultraschalltransducer oder Empfangen des zweiten Ultraschallsignals, welches an einem Objekt in dem Erfassungsbereich der Ultraschallsensorvorrichtung reflektiert wird, durch den ersten Ultraschalltransducer und/oder den zweiten Ultraschalltransducer.

Durch die unterschiedlichen Frequenzen sind das erste Ultraschallsignal und das zweite Ultraschallsignal unterscheidbar. Hierbei hat sich im Rahmen der vorliegenden Erfindung gezeigt, dass aufgrund der unterschiedlichen Lage der ersten Frequenz *f*₁ und der zweiten Frequenz *f*₂ relativ zu der Resonanzfrequenz *f*₀ unterschiedliche Eigenschaften des derart erzeugten ersten Ultraschallsignals und des zweiten Ultraschallsignals ausgenutzt werden können zur optimierten Erfassung von Objekten im Nahbereich sowie im Fernbereich des jeweiligen Ultraschalltransducers. Umso größer der Frequenzabstand einer Frequenz zu der Resonanzfrequenz *f*₀ des jeweiligen Ultraschalltransducers, umso geringer ist die Amplitude des Ultraschallsignals bei gleicher Anregung. Ein Ultraschallsignal mit einer Frequenz weiter entfernt von der Resonanzfrequenz *f*₀ weist somit eine geringere Amplitude auf als eine Frequenz mit einem geringeren Frequenzabstand zu der Resonanzfrequenz *f*₀ bei gleicher Anregung. Weisen somit die erste Frequenz *f*₁ und die zweite Frequenz *f*₂ einen unterschiedlichen Frequenzabstand zu der Resonanzfrequenz *f*₀ auf, können unterschiedlich starke Ultraschallsignale erzeugt werden. Weist beispielsweise die erste Frequenz *f*₁ einen größeren Frequenzabstand zu der Resonanzfrequenz *f*₀ auf, ist bei gleicher Anregung die Amplitude kleiner, so dass insbesondere Objekte im Nahbereich des Ultraschalltransducers mit der ersten Frequenz *f*₁ besser detektiert werden können. Ein Übersteuern der Ultraschalltransducer oder Mehrfachreflektionen zwischen den Ultraschalltransducern und dem Objekt im Nahbereich der Ultraschalltransducer können somit reduziert bzw. verhindert werden. Weist dahingehen die zweite Frequenz *f*₂ einen geringeren Frequenzabstand zu der Resonanzfrequenz *f*₀ auf, kann das zweite Ultraschallsignal mit der zweiten Frequenz *f*₂ eine größere Amplitude aufweisen, so dass auch noch weiter entfernte Objekte und insbesondere Objekte im Fernbereich des Ultraschalltransducers zuverlässig detektiert werden können. Gleichzeitig hat sich gezeigt, dass auch die Abklingdauer der Anregung eines Ultraschalltransducers kürzer wird, umso größer der Frequenzabstand zwischen der Anregungsfrequenz und der Resonanzfrequenz *f*₀ des jeweiligen Ultraschalltransducers ist. Auch dies hilft bei der zuverlässigen Detektierung von Objekten im Nahbereich des Ultraschalltransducers, da die Anregung schneller abklingt, wodurch die Totzeit des Ultraschalltransducers aufgrund seiner Anregung reduziert wird. Die Totzeit beschreibt hierbei die Zeit, in welcher der Ultraschalltransducer aufgrund seiner Anregung in Schwingung versetzt ist, wobei in dieser Zeit keine externe Anregung durch ein reflektiertes Ultraschallsignal detektiert werden kann. Durch die Reduzierung der Abklingzeit kann die Totzeit ebenfalls reduziert werden und Objekte im Nahbereich der Ultraschalltransducer besser detektiert werden. Somit hat sich gezeigt, dass eine asymmetrische Verteilung der ersten Frequenz *f*₁ und der zweiten Frequenz *f*₂ vorteilig ist bei der zuverlässigen Detektion von Objekten sowohl im Nahfeld als auch im Fernfeld des Ultraschalltransducers.

Vorzugsweise sind die erste Zeitdauer und die zweite Zeitdauer zumindest teilweise überlappend. Insbesondere sind die erste Zeitdauer und die zweite Zeitdauer vollständig überlappend, so dass das erste Ultraschallsignal und das zweite Ultraschallsignal gleichzeitig erzeugt werden. Insbesondere weisen das erste Ultraschallsignal und das zweite Ultraschallsignal in dem überlappenden Bereich ihrer Zeitdauer zumindest zu einem Zeitpunkt des zeitlichen Überlapps einen unterschiedliche Frequenzabstand zu der Resonanzfrequenz *f*₀ auf.

Vorzugsweise weist der erste Ultraschalltransducer und der zweite Ultraschalltransducer dieselbe oder eine unterschiedliche Resonanzfrequenz *f*₀ auf. Insbesondere sind der erste Ultraschalltransducer und der zweite Ultraschalltransducer identisch ausgebildet.

Vorzugsweise weisen die erste Frequenz *f*₁ und die zweite Frequenz *f*₂ zu jedem Zeitpunkt einen unterschiedlichen Frequenzabstand zu der Resonanzfrequenz *f*₀ auf. Insbesondere weisen das erste Ultraschallsignal und das zweite Ultraschallsignal in dem überlappenden Bereich ihrer Zeitdauer zu allen Zeitpunkten des zeitlichen Überlapps einen unterschiedliche Frequenzabstand zu der Resonanzfrequenz *f*₀ auf. Hierdurch wird insbesondere sichergestellt, dass die unterschiedlichen Anregungscharakteristika der Ultraschalltransducer in Abhängigkeit vom Frequenzabstand zu der Resonanzfrequenz *f*₀ stets optimal implementiert werden können. Gleichzeitig wird sichergestellt, dass zu jedem Zeitpunkt das erste Ultraschallsignal und das zweite Ultraschallsignal unterscheidbar sind.

Vorzugsweise weisen die erste Frequenz *f*₁ und die zweite Frequenz *f*₂ bis auf einen Zeitpunkt zu jedem anderen Zeitpunkt einen unterschiedlichen Frequenzabstand zu der Resonanzfrequenz *f*₀ auf. Somit können beispielsweise die erste Frequenz *f*₁ und die zweite Frequenz *f*₂ mit einem identischen Frequenzabstand zu der Resonanzfrequenz *f*₀ beginnen und sodann einen unterschiedlichen Frequenzverlauf aufweisen. Alternativ hierzu, bei sich verändernder erster Frequenz *f*₁ oder zweiter Frequenz *f*₂, können die erste Frequenz *f*₁ und die zweite Frequenz *f*₂ einen Kreuzungspunkt aufweisen, welcher insbesondere mit der Resonanzfrequenz *f*₀ zusammenfällt, wobei hier für die erste Frequenz *f*₁ und die zweite Frequenz *f*₂ der Frequenzabstand gleich Null gilt. Alternativ ist der Kreuzungspunkt von der Resonanzfrequenz *f*₀ verschieden.

Vorzugsweise werden durch das Ultraschallsignal mit der Frequenz mit dem größeren Abstand zu der Resonanzfrequenz *f*₀ Objekte im Nahbereich des Ultraschalltransducers und durch das Ultraschallsignal mit der Frequenz mit dem kleineren Abstand zu der Resonanzfrequenz *f*₀ Objekte im Fernbereich des Ultraschalltransducers erfasst. Handelt es sich um einen Frequenzverlauf, so kann das Ultraschallsignal mit einer mittleren Frequenz, die einen größeren Abstand hat zu der Resonanzfrequenz *f*₀ als die Mittenfrequenz des anderen Ultraschallsignals, zur Detektion von Objekten im Nahbereich der Ultraschalltransducer genutzt werden. Alternativ kann bei einem Frequenzverlauf das Ultraschallsignal mit einer Frequenz am Anfang oder Ende des Zeitverlaufs, die einen größeren Abstand hat zu der Resonanzfrequenz *f*₀ als die Frequenz zum entsprechenden Zeitpunkt des anderen Ultraschallsignals, zur Detektion von Objekten im Nahbereich der Ultraschalltransducer genutzt werden. Das jeweils andere Ultraschallsignal erfährt eine stärkere Anregung und kann somit genutzt werden zur zuverlässigen Detektion von Objekten im Fernbereich. Somit werden unter Beibehaltung der Unterscheidbarkeit des ersten Ultraschallsignals und des zweiten Ultraschallsignals aufgrund der unterschiedlichen Frequenzen gleichzeitig die unterschiedlichen Anregungscharakteristika genutzt zur zuverlässigen Detektion eines Objekts oder Hindernisses im Nahfeld des Ultraschalltransducers bzw. im Fernbereich des Ultraschalltransducers.

Vorzugsweise sind die erste Frequenz *f*₁ und/oder die zweite Frequenz *f*₂ konstant für die jeweilige Zeitdauer. Somit wird das erste Ultraschallsignal mit der ersten Frequenz *f*₁ für die jeweilige Zeitdauer ausgesendet und/oder das zweite Ultraschallsignal wird für die jeweilige Zeitdauer mit der zweiten Frequenz *f*₂ ausgesendet, wobei die erste Frequenz *f*₁ und/oder die zweite Frequenz *f*₂ über die gesamte Zeitdauer konstant sein können.

Vorzugsweise ist die erste Frequenz *f*₁ veränderlich für die jeweilige Zeitdauer. Alternativ oder zusätzlich dazu ist die zweite Frequenz *f*₂ veränderlich für die jeweilige Zeitdauer. Insbesondere weisen die erste Frequenz *f*₁ und/oder die zweite Frequenz *f*₂ einen linearen oder nicht linearen Chirp auf. Ein Chirp bezeichnet hierbei einen monoton ansteigenden oder monoton abfallenden Frequenzverlauf. Hierbei kann der Anstieg oder Abfall linear oder nicht linear erfolgen entsprechend einem linearen Chirp oder einem nicht linearen Chirp.

Vorzugsweise weisen die erste Frequenz *f*₁ und die zweite Frequenz *f*₂ einen linearen Chirp auf mit einer entgegengesetzten oder gleichgerichteten Frequenzänderung. So kann beispielsweise bei einer gleichgerichteten Frequenzänderung die erste Frequenz *f*₁ als auch die zweite Frequenz *f*₂ ansteigen über die Zeitdauer der Erzeugung. Bei einer entgegengesetzten Frequenzänderung ändern sich entsprechend die erste Frequenz *f*₁ und die zweite Frequenz *f*₂ mit unterschiedlichen Vorzeichen.

Vorzugsweise ist die Änderungsrate der ersten Frequenz *f*₁ und/oder der zweiten Frequenz *f*₂ konstant oder ändert sich mit der Zeit.

Vorzugsweise ist die Änderungsrate der ersten Frequenz *f*₁ und der zweiten Frequenz *f*₂ gleich oder verschieden.

Vorzugsweise weist die erste Frequenz *f*₁ und die zweite Frequenz *f*₂ einen Kreuzungspunkt auf. Insbesondere fällt dieser Kreuzungspunkt nicht mit der Resonanzfrequenz *f*₀ zusammen. Alternativ hierzu fällt dieser Kreuzungspunkt **mit der Resonanzfrequenz** *f*₀ zusammen. Als Kreuzungspunkt wird hierbei ein Zeitpunkt bezeichnet, in dem die erste Frequenz *f*₁ und die zweite Frequenz *f*₂ gleich sind. Insbesondere bei einem symmetrisch ausgebildeten Frequenzverlauf für die erste Frequenz *f*₁ und die zweite Frequenz *f*₂ fällt der Kreuzungspunkt mit der Resonanzfrequenz *f*₀ zusammen. Gemäß der vorliegenden Erfindung wird ein solcher symmetrischer Frequenzverlauf für die erste Frequenz *f*₁ und die zweite Frequenz *f*₂ gerade vermieden, weshalb der Kreuzungspunkt gerade nicht mit der Resonanzfrequenz *f*₀ zusammenfallen muss. Weisen jedoch die erste Frequenz *f*₁ und die zweite Frequenz *f*₂ einen unterschiedlichen Chirp auf, d.h. eine unterschiedliche Änderungsrate der Frequenz über die Zeit, so kann jedoch auch weiterhin der Kreuzungspunkt mit der Resonanzfrequenz *f*₀ zusammenfallen, wobei weiterhin erfüllt ist, dass zumindest zu einem Zeitpunkt und insbesondere zu allen Zeitpunkten, mit Ausnahme des Kreuzungspunktes, die erste Frequenz *f*₁ und die zweite Frequenz *f*₂ einen unterschiedlichen Frequenzabstand zu der Resonanzfrequenz *f*₀ aufweisen.

Vorzugsweise liegen die erste Frequenz *f*₁ und die zweite Frequenz *f*₂ innerhalb der Bandbreite von sowohl dem ersten Ultraschalltransducer als auch dem zweiten Ultraschalltransducer. Hierdurch ist es möglich, dass das erste Ultraschallsignal mit der ersten Frequenz *f*₁ sowie das zweite Ultraschallsignal mit der zweiten Frequenz *f*₂ sowohl von den jeweiligen Ultraschalltransducern erzeugt werden kann, als auch Reflektionen des jeweiligen Ultraschallsignals von den Ultraschalltransducern empfangen werden kann und somit eine Detektion eines Objekts oder Hindernisses im Erfassungsbereich der Ultraschalltransducer ermöglicht wird.

Vorzugsweise ist der Abstand der ersten Frequenz *f*₁ von der zweiten Frequenz *f*₂ größer als die jeweilige Bandbreite des ersten Ultraschallsignals und des zweiten Ultraschallsignals.

Vorzugsweise, wenn die dem Erfassungsbereich reflektierten Ultraschallsignale von den Ultraschalltransducern empfangen werden, wird von den Ultraschalltransducern jeweils ein Rohsignal ausgegeben. Im Betrieb der Ultraschallsensorvorrichtung kann das erste Ultraschallsignal, welches beispielsweise an einem Objekt in dem Erfassungsbereich reflektiert wird von dem ersten Ultraschalltransducer empfangen werden. Das erste Ultraschallsignal kann auch von dem zweiten Ultraschalltransducer empfangen werden. In gleicher Weise kann das zweite Ultraschallsignal, das von dem zweiten Ultraschalltransducer ausgesendet wird und in dem Erfassungsbereich reflektiert wird, von dem ersten Ultraschalltransducer und/oder dem zweiten Ultraschalltransducer empfangen werden. Bei dem Empfangen des jeweiligen Ultraschallsignals trifft das Ultraschallsignal auf den Ultraschalltransducer, wodurch dieser zu einer mechanischen Schwingung angeregt wird. Diese mechanische Schwingung kann ein jeweiliges Wandlerelement in Form eines Rohsignals ausgegeben werden. Bei dem Rohsignal handelt es sich insbesondere um eine zeitlich veränderliche elektrische Spannung. Dieses Rohsignal kann dann entsprechend weiterverarbeitet werden, um zu überprüfen, ob das erste Ultraschallsignal oder das zweite Ultraschallsignal mit den jeweiligen Ultraschalltransducer empfangen wurde.

Vorzugsweise werden die jeweiligen Rohsignale zum Erkennen des empfangenen ersten Ultraschallsignals mit einem ersten Bandpassfilter, dessen Durchlassbereich die erste Frequenz umfasst, gefiltert und zum Erkennen des empfangenen zweiten Ultraschallsignals werden die jeweiligen Rohsignale mit einem zweiten Bandpassfilter, dessen Durchlassbereich die zweite Frequenz umfasst, gefiltert. Das erste Bandpassfilter kann eine Mittelfrequenz, die der ersten Frequenz entspricht, und eine Halbwertsbreite von -3 dB eines Frequenzunterschieds aufweisen. In gleicher Weise kann das zweite Bandpassfilter eine Mittelfrequenz, die der zweiten Frequenz entspricht, und eine Halbwertsbreite von -3 dB des Frequenzunterschieds aufweisen. Dabei ist der Frequenzunterschied derart bestimmt, dass dieser kleiner ist als der Betrag des Unterschieds zwischen der erste Frequenz und der zweiten Frequenz. Somit können die jeweiligen Rohsignale, die mit dem ersten Ultraschallsensor und/oder dem zweiten Ultraschallsensor bereitgestellt werden, daraufhin untersucht werden, ob diese das reflektierte erste Ultraschallsignal oder das reflektierte zweite Ultraschallsignal beschreiben. Es ist somit möglich parallel zu messen, d.h. mit dem ersten Ultraschallsensor und dem zweiten Ultraschallsensor gleichzeitig zu messen.

Vorzugsweise werden die jeweiligen Rohsignale zum Erkennen des empfangenen ersten Ultraschallsignals und/oder des empfangenen zweiten Ultraschallsignals moduliert, insbesondere sofern die erste Frequenz *f*₁ und/oder die zweite Frequenz *f*₂ veränderlich sind. Dabei wird eine erste Modulation für das erste Ultraschallsignals verwendet. Für das zweite Ultraschallsignal wird eine zweite Modulation verwendet. Bei einem Chipsignal können unterschiedliche Trägerfrequenzen für die Modulation verwendet werden. Auch auf diese Weise kann überprüft werden, ob das Rohsignal von dem ersten Ultraschallsignal oder dem zweiten Ultraschallsignal stammen.

Vorzugsweise werden die jeweiligen Rohsignale zum Erkennen des empfangenen ersten Ultraschallsignals mit einem ersten Anregungssignal korreliert werden und/oder zum Erkennen des empfangenen zweiten Ultraschallsignals mit einem zweiten Anregungssignal korreliert. Das erste Anregungssignal entspricht insbesondere dem Signal, mit dem das Wandlerelement beziehungsweise der ersten Ultraschalltransducer zum Aussenden des ersten Ultraschallsignals angeregt wird. Das zweite Anregungssignal entspricht insbesondere dem Signal, mit dem das Wandlerelement beziehungsweise der zweite Ultraschalltransducer zum Aussenden des zweiten Ultraschallsignals angeregt wird. Das Rohsignal, das mit dem ersten Ultraschalltransducer bereitgestellt wird, wird dann mit dem ersten Anregungssignal korreliert. Wenn das erste Ultraschallsignal mit dem ersten Ultraschalltransducer empfangen wurde, wird eine Autokorrelation durchgeführt. Wenn mit dem ersten Ultraschalltransducer das zweite Ultraschallsignal empfangen wurde, wird eine Kreuzkorrelation durchgeführt. Dies gilt in gleicher Weise für den zweiten Ultraschalltransducer. Falls ein digitales Modulationsverfahren verwendet wird, kann eine sogenannte Missmatch-Korrelation durchgeführt werden, um Artefakte bei der Autokorrelation zu minimieren. Falls Chipsignale verwendet werden, kann eine zusätzliche Fensterfunktion verwendet werden, um Nebenkeulen zu minimieren. Somit kann auf zuverlässige Weise bestimmt werden, ob das Rohsignal von dem ersten Ultraschallsignal oder von dem zweiten Ultraschallsignal stammt.

In einem weiteren Aspekt der vorliegenden Erfindung wird eine Vorrichtung bereitgestellt, welche insbesondere ausgebildet ist als mikroelektronische Schaltung. Die Vorrichtung ist ausgebildet zur Verbindung mit mindestens einem Ultraschalltransducer. Die Vorrichtung weist eine Speichereinheit auf und einen Prozessor, wobei die Speichereinheit Instruktionen speichert, die, wenn vom Prozessor ausgeführt, die Schritte des vorstehend beschriebenen Verfahrens ausführt.

Vorzugsweise handelt es sich bei der mikroelektronischen Schaltung um einen integrierten Schaltkreis, oder einen anwendungsangepassten integrierten Schaltkreis (ASIC - Application Specific Integrated Circuit) oder einen FPGA oder dergleichen.

In einem weiteren Aspekt der vorliegenden Erfindung wird ein System bereitgestellt mit einer Vorrichtung wie vorstehend beschrieben und mindestens einem ersten Ultraschalltransducer und einem zweiten Ultraschalltransducer, welche mit der Vorrichtung verbunden sind.

Vorzugsweise weist das System mehr als zwei Ultraschalltransducer auf.

In einem weiteren Aspekt der vorliegenden Erfindung wird ein computerlesbares Speichermedium bereitgestellt, welches Befehle umfasst, die bei der Ausführung durch einen Prozessor, insbesondere eines Systems wie vorstehend beschrieben, diesen veranlassen, das vorstehend beschriebene Verfahren auszuführen.

Nachfolgend wird die Erfindung anhand bevorzugter Ausführungsformen unter Bezugnahme auf die beigefügten Figuren näher erläutert. Die Figuren zeigen:
- Fig. 1: Eine schematische Ultraschallsensorvorrichtung gemäß der vorliegenden Erfindung
- Fig. 2: Ein exemplarisches Anregungsprofil eines Ultraschalltransducers mit einem ersten Ultraschallsignal und einem zweiten Ultraschallsignal gemäß dem Stand der Technik
- Fign. 3A-3F:: Darstellungen von Anregungen des ersten Ultraschallsignals und des zweiten Ultraschallsignals gemäß der vorliegenden Erfindung
- Fign. 4A-4J:: Darstellungen von Anregungen des ersten Ultraschallsignals und des zweiten Ultraschallsignals gemäß der vorliegenden Erfindung
- Fign. 5A-5F:: Darstellungen von Anregungen des ersten Ultraschallsignals und des zweiten Ultraschallsignals gemäß der vorliegenden Erfindung
- Fign. 6A-6R:: Darstellungen von Anregungen des ersten Ultraschallsignals und des zweiten Ultraschallsignals gemäß der vorliegenden Erfindung
- Fign. 7A-7F:: Darstellungen von Anregungen des ersten Ultraschallsignals und des zweiten Ultraschallsignals gemäß der vorliegenden Erfindung
- Fign.: 8A-8H:Darstellungen von Anregungen des ersten Ultraschallsignals und des zweiten Ultraschallsignals gemäß der vorliegenden Erfindung
- Fign. 9A-9B:: Darstellungen von Anregungen des ersten Ultraschallsignals und des zweiten Ultraschallsignals gemäß der vorliegenden Erfindung

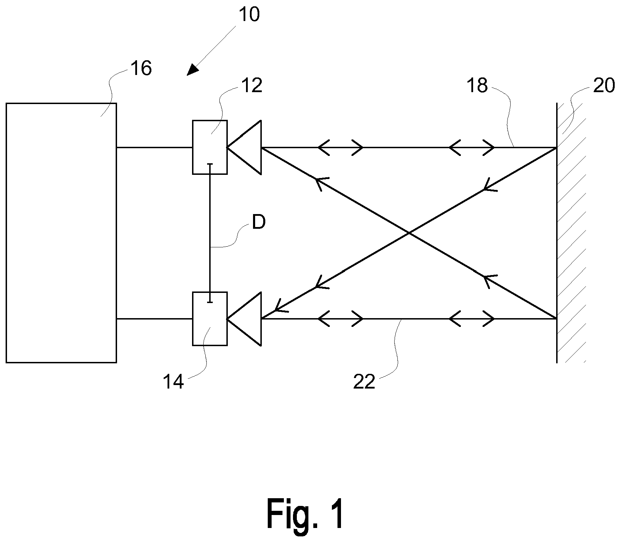

Nachfolgend wird Bezug genommen auf die Figur 1. Figur 1 zeigt eine Ultraschallsensorvorrichtung 10 mit einem ersten Ultraschalltransducer 12 und einem zweiten Ultraschalltransducer 14. Der erste Ultraschalltransducer 12 und der zweite Ultraschalltransducer 14 sind zueinander beabstandet angeordnet. Insbesondere beträgt der Abstand D zwischen dem ersten Ultraschalltransducer 12 und dem zweiten Ultraschalltransducer 14 mehr als 5 cm insbesondere mehr als 10 cm und bevorzugt mehr als 20 cm. Der erste Ultraschalltransducer 12 und der zweite Ultraschalltransducer 14 sind mit einer Auswertevorrichtung 16 verbunden. Wie schematischen in der Figur 1 dargestellt, wird durch den ersten Ultraschalltransducer 12 ein erstes Ultraschallsignal 18 ausgesendet. Dieses erste Ultraschallsignal 18 wird von einem Objekt 20 oder Hindernis im Erfassungsbereich der Ultraschallsensorvorrichtung 10 reflektiert und gelangt auf diese Weise sowohl zu dem ersten Ultraschalltransducer 12 als auch, wie schematisch in der Figur 1 dargestellt, zu dem zweiten Ultraschalltransducer 14. Ein vom zweiten Ultraschalltransducer 14 ausgesendetes zweites Ultraschallsignal 22 kann ebenfalls an dem Objekt 20 im Erfassungsbereich der Ultraschallsensorvorrichtung 10 reflektiert werden und gelangt dabei sowohl zu dem zweiten Ultraschalltransducer 14 zurück als auch zu dem ersten Ultraschalltransducer 12. Hierbei weisen das erste Ultraschallsignal 18 und das zweite Ultraschallsignal 22 eine unterschiedliche Frequenz auf, so dass das erste Ultraschallsignal 18 und das zweite Ultraschallsignal 22, empfangen von dem ersten Ultraschalltransducer 12, anhand der Frequenz getrennt werden kann. Ebenso kann das durch den zweiten Ultraschalltransducer 14 empfangene erste Ultraschallsignal 18 und das zweite Ultraschallsignal 22 anhand seiner Frequenz getrennt werden.

Dabei weist das erste Ultraschallsignal 18 eine erste Frequenz *f*₁ auf und das zweite Ultraschallsignal 22 weist eine zweite Frequenz *f*₂ auf. Der erste Ultraschalltransducer 12 und der zweite Ultraschalltransducer 14 weisen dabei eine Resonanzfrequenz *f*₀ auf. Insbesondere sofern der Ultraschalltransducer 12 und der zweite Ultraschalltransducer 14 identisch ausgebildet sind, ist auch deren Resonanzfrequenz *f*₀ im Wesentlichen, d.h. im Rahmen der Produktionsgenauigkeit, identisch.

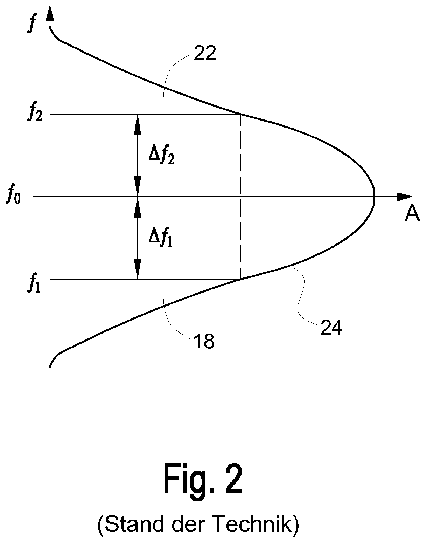

In der Figur 2 ist ein schematisches Anregungsprofil 24 für einen Ultraschalltransducer exemplarisch dargestellt. Aus dem Stand der Technik, dargestellt in der Figur 2, ist bekannt die erste Frequenz *f*₁ und die zweite Frequenz *f*₂ symmetrisch um die Resonanzfrequenz *f*₀ anzuordnen, so dass die erste Frequenz *f*₁ einen Abstand Δ*f*₁ zu der Resonanzfrequenz *f*₀ aufweist und die zweite Frequenz *f*₂ einen Abstand Δ*f*₂ zu der Resonanzfrequenz *f*₀ aufweist, wobei im Stand der Technik Δ*f*₁= Δ*f*₂ ist. Aufgrund des symmetrischen

**Abstands** zu der Resonanzfrequenz *f*₀ weisen das erste Ultraschallsignal 18 und das zweite Ultraschallsignal 22 dieselbe Amplitude auf. Auch wenn in der Figur 2 ein symmetrisches Verstärkungsprofil 24 dargestellt ist, wird für einen realen Ultraschalltransducer ein Verstärkungsprofil stets asymmetrisch abfallen, ausgehend von der Resonanzfrequenz *f*₀. Insbesondere fällt das Verstärkungsprofil 24 zu höheren Frequenzen weniger steil ab als zu niedrigen Frequenzen. Durch asymmetrisch um die Resonanzfrequenz *f*₀ herum angeordnete Frequenzen *f*₁, *f*₂ des ersten Ultraschallsignals 18 bzw. des zweiten Ultraschallsignals 22 kann dem Rechnung getragen werden und eine entsprechende Anpassung an das Verstärkungsprofil erfolgen durch eine geeignete Verschiebung der Frequenzen *f*₁, *f*₂ des ersten Ultraschallsignals 18 bzw. des zweiten Ultraschallsignals 22 relativ zu der Resonanzfrequenz *f*₀.

Es hat sich im Rahmen der vorliegenden Erfindung herausgestellt, dass eine asymmetrische Verteilung der ersten Frequenz *f*₁ und der zweiten Frequenz *f*₂ um die Resonanzfrequenz für das erste Ultraschallsignal 18 und das zweite Ultraschallsignal 22 Vorteile bei der zuverlässigen Detektion von Objekten sowohl im Nahbereich des Ultraschalltransducers als auch im Fernbereich bereitstellt. Hierbei ist aus der Figur 2 ersichtlich, dass mit steigendem Abstand der Frequenz zu der Resonanzfrequenz *f*₀ die Amplitude des angeregten Ultraschallsignals sinkt aufgrund des abfallenden Verstärkungsprofils 24. Das Ultraschallsignal kann somit nur schwächer angeregt werden. Gleichzeitig klingt die Anregung des jeweiligen Ultraschalltransducers 14, 16 für ein Ultraschallsignal mit einem größeren Abstand zur Resonanzfrequenz *f*₀ schneller ab. Dies hat den Vorteil, dass aufgrund der geringeren Amplituden eine Sättigung des Ultraschalltransducers durch ein an einem Objekt im Nahbereich des Ultraschalltransducers reflektiertes Ultraschallsignals reduziert werden kann. Gleichzeitig kann durch die verkürzte Abklingdauer des Ultraschalltransducers die Totzeit des Ultraschalltransducers verkürzt werden, so dass dieser schneller bzw. früher ein Ultraschallecho aus dem Erfassungsbereich detektieren kann.

Gemäß der vorliegenden Erfindung wird dabei ein Ultraschallsignal mit einem geringen Abstand zur Resonanzfrequenz erzeugt, so dass dieses eine große **Amplitude** erreichen kann. Mit diesem Ultraschallsignal können auch weit entfernte Objekte im Erfassungsbereich der Ultraschallsensorvorrichtung detektiert werden. Gleichzeitig wird ein weiteres Ultraschallsignal verwendet mit einem größeren Abstand zur Resonanzfrequenz, welches eine bessere Detektion von Objekten näher am Ultraschalltransducer erlaubt.

Die nachfolgenden Figuren zeigen den Frequenzverlauf für das erste Ultraschallsignal 18 und das zweite Ultraschallsignal 22 über die Zeit.

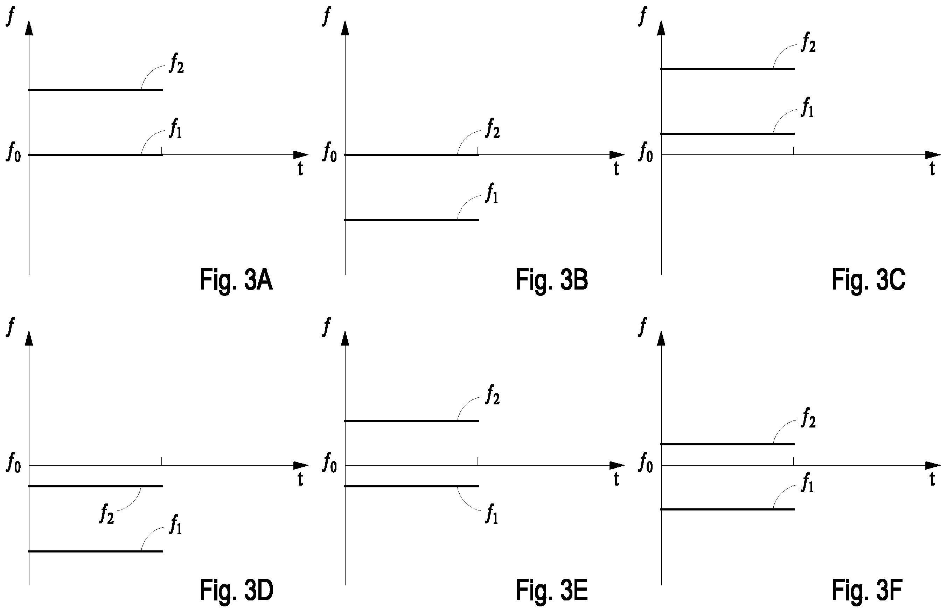

Im Nachfolgenden wird Bezug genommen auf die Figuren 3A-3F. In den Figuren 3A-3F weisen das erste Ultraschallsignal 18 und das zweite Ultraschallsignal 22 eine konstante Frequenz auf. Hierbei werden das erste Ultraschallsignal 18 und das zweite Ultraschallsignal 22 gleichzeitig ausgesendet, so dass das erste Ultraschallsignal 18 mit der Frequenz *f*₁ und das zweite Ultraschallsignal 22 mit der Frequenz *f*₂ zeitlich vollständig überlappen.

Gemäß der Figur 3A weist das erste Ultraschallsignal 18 eine erste Frequenz *f*₁ auf, welche mit der Resonanzfrequenz *f*₀ übereinstimmt. Das zweite Ultraschallsignal 22 weist hierbei eine höhere zweite Frequenz *f*₂ auf. Der Abstand der ersten Frequenz *f*₁ zu der Resonanzfrequenz *f*₀ ist null. Der Abstand der zweiten Frequenz *f*₂ zu der Resonanzfrequenz *f*₀ ist dabei von null verschieden.

Gemäß der Figur 3B ist im Vergleich zu der Figur 3A die Situation gerade umgekehrt, so dass das zweite Ultraschallsignal 22 eine Frequenz *f*₂ aufweist, welche mit der Resonanzfrequenz *f*₀ zusammenfällt und das erste Ultraschallsignal 18 eine Frequenz aufweist welche niedriger ist als die Resonanzfrequenz *f*₀.

Gemäß der Figur 3C weisen sowohl das erste Ultraschallsignal 18 als auch das zweite Ultraschallsignal 22 eine Frequenz oberhalb der Resonanzfrequenz *f*₀ auf.

Gemäß der Figur 3D weisen sowohl das erste Ultraschallsignal 18 als auch das zweite Ultraschallsignal 22 eine Frequenz unterhalb der Resonanzfrequenz *f*₀ auf.

Gemäß der Figur 3E weist das erste Ultraschallsignal 18 eine erst Frequenz *f*₁ auf, welche kleiner ist als die Resonanzfrequenz *f*₀ und das zweite Ultraschallsignal 22 weist eine zweite Frequenz *f*₂ auf, die größer ist als die Resonanzfrequenz *f*₀. Hierbei weist die erste Frequenz *f*₁ einen kleineren Abstand zu der Resonanzfrequenz *f*₀ auf als die zweite Frequenz f₂.

Die Situation ist umgekehrt in der Figur 3F bei der die zweite Frequenz *f*₂ einen geringeren Abstand zu der Resonanzfrequenz *f*₀ aufweist als die erste Frequenz *f*₁.

In allen Ausführungsformen gezeigt in den Figuren 3A bis 3F wiesen die Ultraschallsignale 18, 22 zu jeder Zeit eine Frequenz *f*₁, *f*₂ auf, die einen unterschiedlichen Abstand zu der Resonanzfrequenz *f*₀ aufweisen. Hierdurch können die unterschiedlichen Anregungscharakteristika optimal ausgenutzt werden für eine verbesserte Detektion von Hindernissen/Objekten im Nahbereich bzw. Fernbereich.

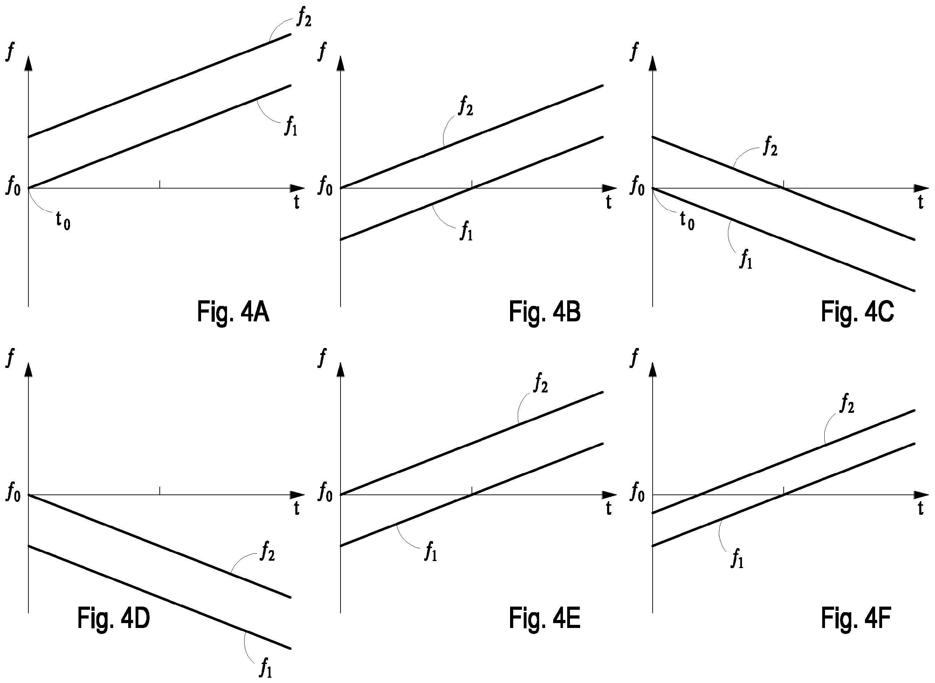

In den Figuren 4A-4J weisen das erste Ultraschallsignal 18 und das zweite Ultraschallsignal 22 eine sich verändernde Frequenz auf. Insbesondere ist in den Figuren 4A-4J ein linearer Chirp dargestellt, welcher eine monoton linear ansteigende Frequenz darstellt. In den Beispielen der Figuren 4A-4J weisen das erste Ultraschallsignal 18 und das zweite Ultraschallsignal 22 eine gleichgerichtete Frequenzänderung auf. Insbesondere weisen das erste Ultraschallsignal 18 und das zweite Ultraschallsignal 22 eine gleiche Frequenzänderung bzw. Änderungsrate auf, so dass der Frequenzverlauf des ersten Ultraschallsignals 18 parallel verläuft zu dem Frequenzverlauf des zweiten Ultraschallsignals 22.

Gemäß der Figur 4A weisen das erste Ultraschallsignal 18 und das zweite Ultraschallsignal 22 eine Frequenzverlauf *f*₁, *f*₂ auf, welche beide größer sind **als die Resonanzfrequenz** *f*₀. Hierbei beginnt der Frequenzverlauf des ersten Ultraschallsignals 18 zum Zeitpunkt *t*₀ mit der Resonanzfrequenz *f*₀. Das erste Ultraschallsignal 18 und das zweite Ultraschallsignal 22 weisen hierbei eine ansteigende Frequenz auf.

Gemäß der Figur 4B weisen das erste Ultraschallsignal 18 und das zweite Ultraschallsignal 22 eine steigende Frequenz über die Zeit auf, wobei der zweite Frequenzverlauf *f*₂ mit der Resonanzfrequenz *f*₀ zum Zeitpunkt *t*₀ beginnt. Der erste Frequenzverlauf *f*₁ beginnt unterhalb der Resonanzfrequenz *f*₀. Die Mittenfrequenz des ersten Frequenzverlaufs *f*₁ entspricht dabei der Resonanzfrequenz *f*₀.

Gemäß der Figur 4C weisen das erste Ultraschallsignal 18 und das zweite Ultraschallsignal 22 Frequenzen *f*₁ und *f*₂ auf, welche über die Zeit abfallen. Hierbei beginnt der erste Frequenzverlauf *f*₁ des ersten Ultraschallsignals 18 mit der Resonanzfrequenz *f*₀. Die Mittenfrequenz des zweiten Frequenzverlaufs *f*₂ entspricht dabei der Resonanzfrequenz *f*₀.

Gemäß der Figur 4D beginnt der zweite Frequenzverlauf *f*₂ des zweiten Ultraschallsignals 22 mit der Resonanzfrequenz *f*₀. Sowohl die erste Frequenz *f*₁ als auch die zweite Frequenz *f*₂ sind hierbei stets kleiner als die Resonanzfrequenz *f*₀.

Gemäß der Figur 4E beginnt der zweite Frequenzverlauf *f*₂ des zweiten Ultraschallsignals 22 mit der Resonanzfrequenz *f*₀. Der erste Frequenzverlauf *f*₁ des ersten Ultraschallsignals 18 weist einen Mittelwert auf, welcher der Resonanzfrequenz *f*₀ gerade entspricht. Somit kreuzt der erste Frequenzverlauf *f*₁ des ersten Ultraschallsignals 18 die Resonanzfrequenz *f*₀ gerade nach der Hälfte der Zeitdauer.

Gemäß Figur 4F ist der erste Frequenzverlauf *f*₁ des ersten Ultraschallsignals 18 identisch zu dem ersten Frequenzverlauf *f*₁ der Figur 4E. Dagegen beginnt der zweite Frequenzverlauf *f*₂ des zweiten Ultraschallsignals 22 unterhalb der Resonanzfrequenz *f*₀.

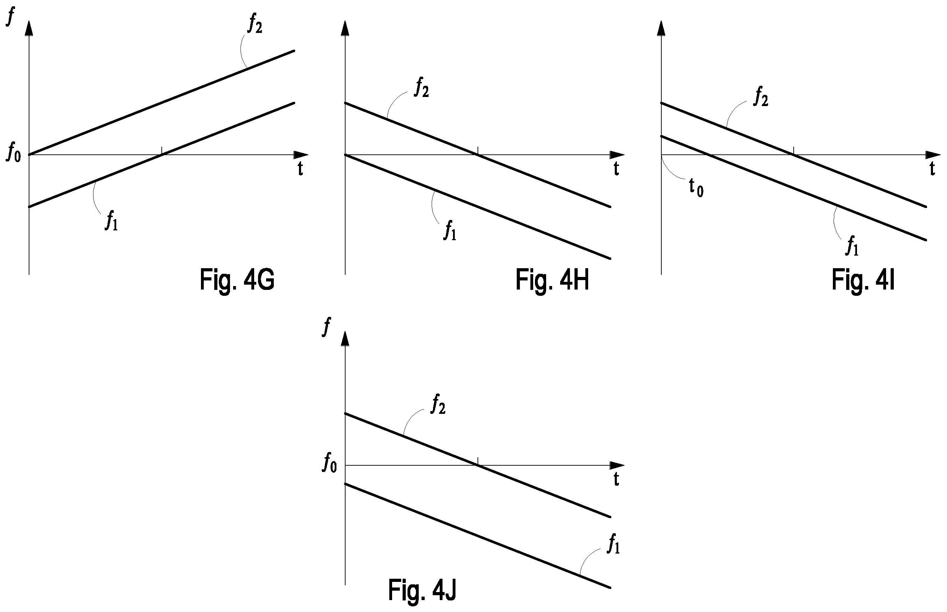

Gemäß der Figur 4G beginnt der zweite Frequenzverlauf *f*₂ des zweiten Ultraschallsignals 22 oberhalb der Resonanzfrequenz *f*₀. Der erste Frequenzverlauf *f*₁ des ersten Ultraschallsignals 18 ist identisch zu dem ersten Frequenzverlauf *f*₁ der Figur 4E.

Gemäß der Figur 4H weisen der erste Frequenzverlauf *f*₁ und der zweite Frequenzverlauf *f*₂ eine abnehmende Frequenz auf. Hierbei weist der zweite Frequenzverlauf *f*₂ des zweiten Ultraschallsignals 22 einen Mittelwert auf, welcher gerade der Resonanzfrequenz *f*₀ des Ultraschalltransducers entspricht. Der erste Frequenzverlauf *f*₁ des ersten Ultraschallsignals 18 beginnt mit der Resonanzfrequenz *f*₀.

Gemäß der Figur 4I beginnt der erste Frequenzverlauf *f*₁ des ersten Ultraschallsignals 18 zum Zeitpunkt *t*₀ oberhalb der Resonanzfrequenz *f*₀ und in der Figur 4J unterhalb der Resonanzfrequenz *f*₀. Der zweite Frequenzverlauf *f*₂ des zweiten Ultraschallsignals 22 ist identisch zu dem zweiten Frequenzverlauf *f*₂ der Figur 4H.

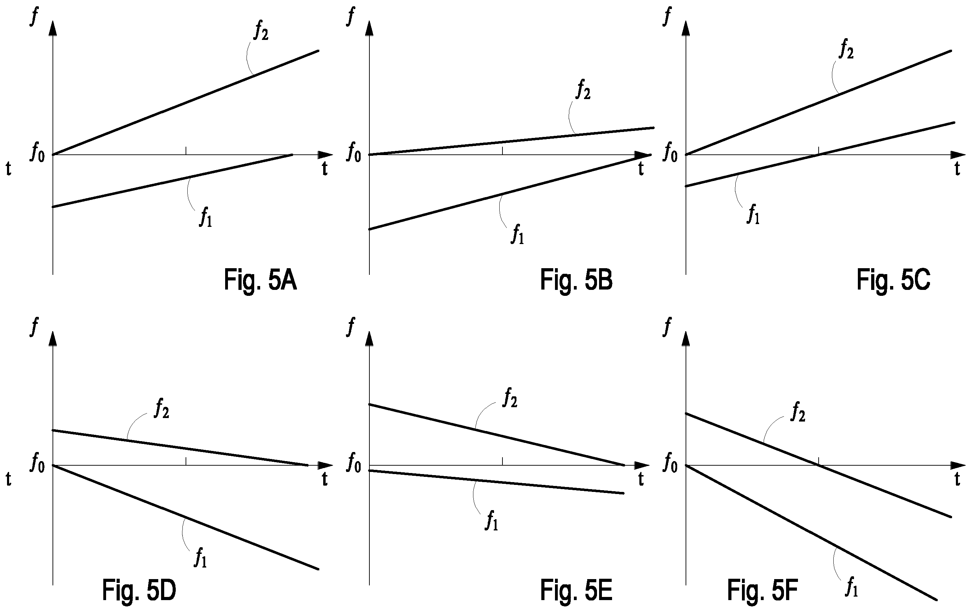

In den Ausführungsbeispielen der Figur 5A-5F weisen der erste Frequenzverlauf *f*₁ und der zweite Frequenzverlauf *f*₂ weiterhin eine linearen Chirp auf. Hierbei ist jedoch die Frequenzänderungsrate des ersten Ultraschallsignals 18 bzw. des zweiten Ultraschallsignals 22 verschieden, wobei sich eine unterschiedliche Steigung der Frequenzverläufe *f*₁, *f*₂ in den Figuren 5A-5F ergibt.

Gemäß der Figur 5A weist der Frequenzverlauf *f*₁ des ersten Ultraschallsignals 18 eine geringe Frequenzänderungsrate auf als der Frequenzverlauf *f*₂ des zweiten Ultraschallsignals 22. Hierbei beginnt beispielsweise der zweite Frequenzverlauf *f*₂ mit der Resonanzfrequenz *f*₀, wohingegen der Frequenzverlauf *f*₁ mit der Resonanzfrequenz *f*₀ endet. Die Situation ist umgekehrt in der Figur 5B bei der die Frequenzänderungsrate für den Frequenzverlauf *f*₂ des zweiten Ultraschallsignals 22 kleiner ist als die Frequenzänderungsrate des Frequenzverlaufs *f*₁. Auf Grund der unterschiedlichen Änderungsrate weisen der erste Frequenzverlauf *f*₁ und der zweite Frequenzverlauf *f*₂ stets einen voneinander verschiedenen Abstand zu der Resonanzfrequenz auf.

Gemäß Figur 5C weist der zweite Frequenzverlauf *f*₂ eine größere Frequenzänderungsrate auf als der erste Frequenzverlauf *f*₁. Der zweite Frequenzverlauf *f*₂ beginnt dabei mit der Resonanzfrequenz *f*₀ und der erste Frequenzverlauf *f*₁ weist hierbei eine Mittenfrequenz auf, welche der Resonanzfrequenz *f*₀ entspricht.

Die Figur 5D zeigt den umgekehrten Fall zu der Figur 5B mit einer sich verringernden Frequenz über die Zeit. Die Figur 5E zeigt den umgekehrten Fall der Figur 5A mit einer sich verringernden Frequenz über die Zeit. Die Figur 5F zeigt den umgekehrten Fall der Figur 5C mit einer sich verringernden Frequenz.

Obwohl Figuren 5A-5F stets eine gleichgerichtete Frequenzänderung aufweist, können die Frequenzen *f*₁ und *f*₂ auch eine entgegengesetzte Frequenzänderung aufweisen zusätzlich zu der unterschiedlichen Frequenzänderungsrate.

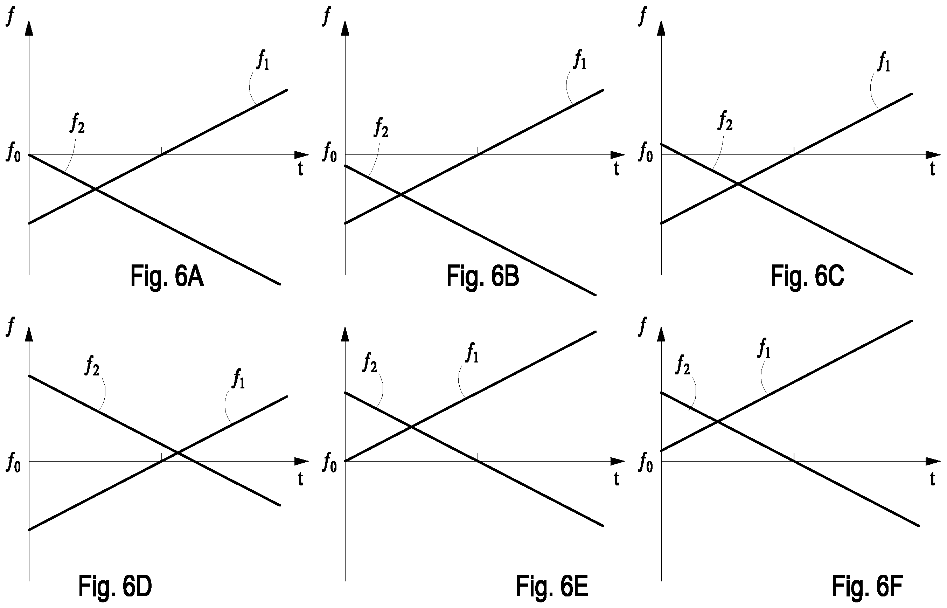

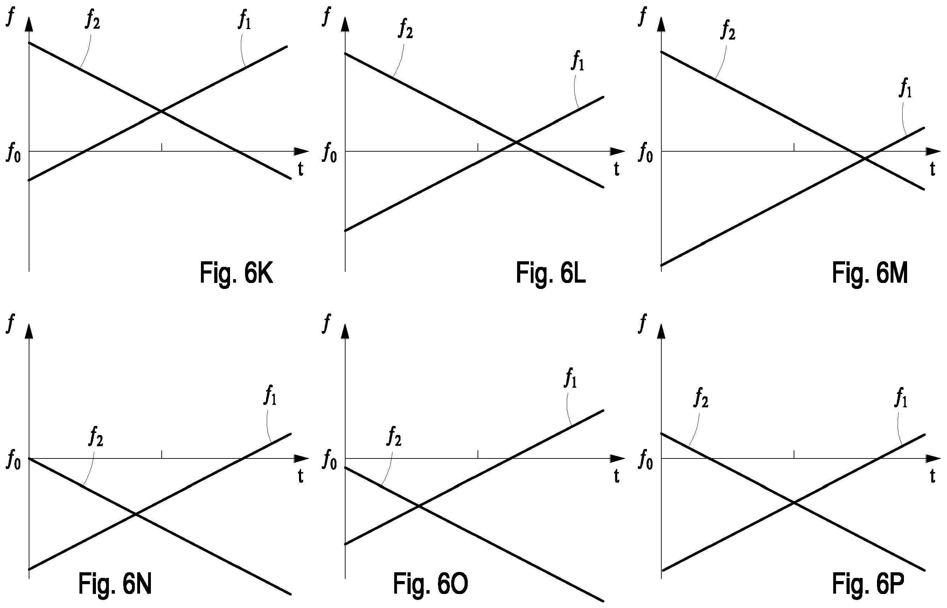

Nachfolgend wird Bezug genommen auf die Figuren 6A-6R.

Gemäß den Beispielen der Figuren 6A-6R weisen der erste Frequenzverlauf *f*₁ und der zweite Frequenzverlauf *f*₂ entgegengesetzte Frequenzänderungen auf. Hierbei ist jedoch der Betrag der Frequenzänderung des ersten Frequenzverlaufs *f*₁ gleich dem Betrag der Frequenzänderungsrate des zweiten Frequenzverlaufs *f*₂. In jedem der Beispiele der Figuren 6A-6R weisen hierbei der erste Frequenzverlauf *f*₁ und der zweite Frequenzverlauf *f*₂ einen Kreuzungspunkt auf, an dem die Frequenzen des erste Ultraschallsignals 18 und des zweiten Ultraschallsignals 22 gleich sind.

**Gemäß den** Figuren 6A-6D weist der erste Frequenzverlauf *f*₁ eine Mittenfrequenz auf, welche der Resonanzfrequenz *f*₀ entspricht.

Gemäß der Figur 6A beginnt der zweite Frequenzverlauf *f*₂ mit der Resonanzfrequenz *f*₀.

Gemäß der Figur 6B beginnt der zweite Frequenzverlauf *f*₂ unterhalb der Resonanzfrequenz *f*₀.

Gemäß der Figur 6C beginnt der zweite Frequenzverlauf *f*₂ oberhalb der Resonanzfrequenz *f*₀ und weist somit einen Kreuzungspunkt mit der Resonanzfrequenz *f*₀ auf, welcher zeitlich vor dem Kreuzungspunkt des ersten Frequenzverlaufs *f*₁ mit der Resonanzfrequenz *f*₀ liegt.

Gemäß der Figur 6D beginnt der zweite Frequenzverlauf *f*₂ oberhalb der Resonanzfrequenz *f*₀. Der zweite Frequenzverlauf *f*₂ weist somit einen Kreuzungspunkt mit der Resonanzfrequenz *f*₀ auf, welcher zeitlich nach dem Kreuzungspunkt des ersten Frequenzverlaufs *f*₁ mit der Resonanzfrequenz *f*₀ liegt.

In den Figuren 6E-6H weist der zweite Frequenzverlauf *f*₂ eine Mittenfrequenz auf, welche der Resonanzfrequenz *f*₀ entspricht.

Gemäß der Figur 6E beginnt der erste Frequenzverlauf *f*₁ mit der Resonanzfrequenz *f*₀.

Gemäß der Figur 6F beginnt der erste Frequenzverlauf *f*₁ oberhalb der Resonanzfrequenz *f*₀, jedoch unterhalb der Anfangsfrequenz des zweiten Frequenzverlaufs *f*₂ zum Zeitpunkt *t*₀.

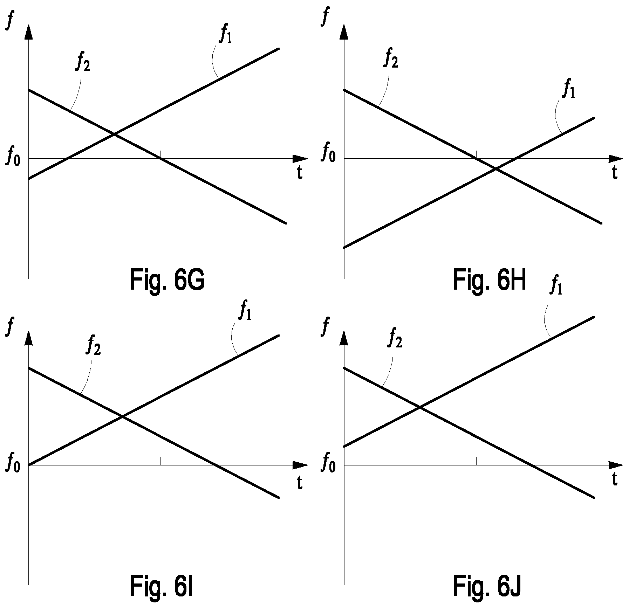

Gemäß der Figur 6G beginnt der erste Frequenzverlauf *f*₁ unterhalb der Resonanzfrequenz *f*₀, wobei der Kreuzungspunkt des ersten Frequenzverlaufs *f*₁ mit der Resonanzfrequenz *f*₀ vor dem Kreuzungspunkt des zweiten Frequenzverlaufs *f*₂.mit der Resonanzfrequenz *f*₀ liegt.

Gemäß der Figur 6H beginnt der erste Frequenzverlauf *f*₁ unterhalb der Resonanzfrequenz *f*₀ derart, dass der Kreuzungspunkt mit der Resonanzfrequenz *f*₀ nach dem Kreuzungspunkt des zweiten Frequenzverlaufs *f*₂ mit der Resonanzfrequenz *f*₀ liegt.

In den Figuren 6I-6M beginnt der zweite Frequenzverlauf *f*₂ oberhalb der Resonanzfrequenz *f*₀, wobei eine Mittenfrequenz des zweiten Frequenzverlaufs *f*₂ oberhalb der Resonanzfrequenz *f*₀ liegt.

Gemäß der Figur 6I beginnt der erste Frequenzverlauf *f*₁ mit der Resonanzfrequenz *f*₀.

Gemäß der Figur 6J beginnt der erste Frequenzverlauf *f*₁ oberhalb der Resonanzfrequenz *f*₀.

Gemäß der Figur 6K beginnt der erste Frequenzverlauf *f*₁ unterhalb der Resonanzfrequenz *f*₀ und insbesondere kreuzt sich der erste Frequenzverlauf *f*₁ mit dem zweiten Frequenzverlauf *f*₂ an deren mittleren Frequenz.

Gemäß der Figur 6L beginnt der erste Frequenzverlauf *f*₁ unterhalb der Resonanzfrequenz *f*₀ derart, dass der Kreuzungspunkt mit dem zweiten Frequenzverlauf *f*₂ oberhalb der Resonanzfrequenz *f*₀ liegt.

Gemäß der Figur 6M beginnt der erste Frequenzverlauf *f*₁ unterhalb der Resonanzfrequenz *f*₀ derart, dass der Kreuzungspunkt mit dem zweiten Frequenzverlauf *f*₂ unterhalb der Resonanzfrequenz *f*₀ liegt.

Die Figuren 6M-6R zeigen die umgekehrte Situation zu den Figuren 6I-6M.

**Gemäß den** Figuren 6M-6R beginnt der erste Frequenzverlauf *f*₁ unterhalb der Resonanzfrequenz *f*₀, wobei die Mittenfrequenz des ersten Frequenzverlaufs *f*₁ ebenfalls unterhalb der Resonanzfrequenz *f*₀ liegt.

Gemäß der Figur 6M beginnt der zweite Frequenzverlauf *f*₂ mit der Resonanzfrequenz *f*₀.

Gemäß der Figur 6O beginnt der zweite Frequenzverlauf *f*₂ unterhalb der Resonanzfrequenz *f*₀.

Gemäß der Figur 6P beginnt der zweite Frequenzverlauf *f*₂ oberhalb der Resonanzfrequenz *f*₀. Der erste Frequenzverlauf *f*₁ und der zweite Frequenzverlauf *f*₂ kreuzen sich an deren jeweiligen mittleren Frequenzen unterhalb der Resonanzfrequenz *f*₀ analog zu dem Beispiel der Figur 6K.

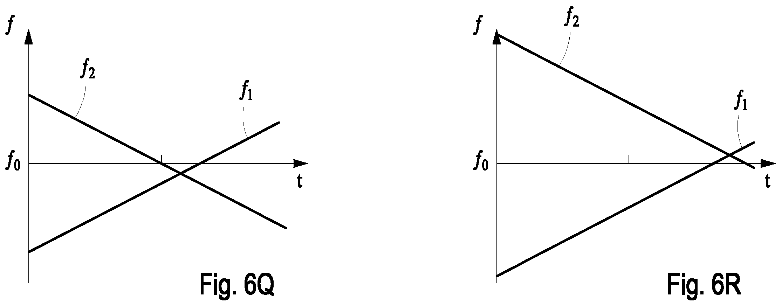

Gemäß der Figur 6Q beginnt der zweite Frequenzverlauf *f*₂ oberhalb der Resonanzfrequenz *f*₀ derart, dass der Kreuzungspunkt mit dem ersten Frequenzverlauf *f*₁ unterhalb der Resonanzfrequenz *f*₀ liegt.

Gemäß der Figur 6R beginnt der zweite Frequenzverlauf *f*₂ oberhalb der Resonanzfrequenz *f*₀ derart, dass der Kreuzungspunkt mit dem ersten Frequenzverlauf *f*₁ oberhalb der Resonanzfrequenz *f*₀ liegt.

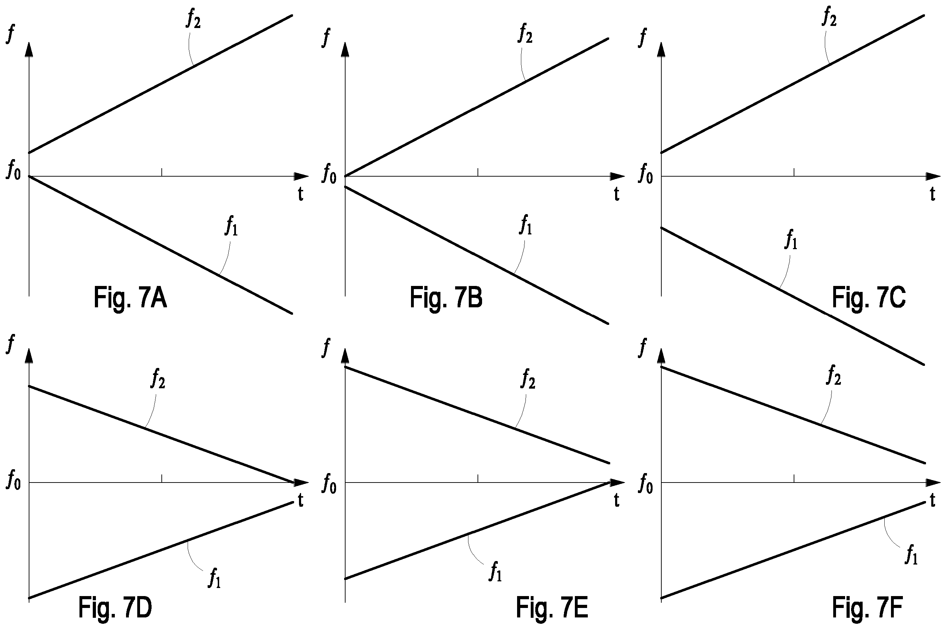

Nachfolgend wird Bezug genommen auf die Figuren 7A-7F. In den Beispielen der Figuren 7A-7F weisen der erste Frequenzverlauf *f*₁ und der zweite Frequenzverlauf *f*₂ weiterhin entgegengesetzte Frequenzänderungen als linearen Chirp auf. Hierbei ist die Frequenzänderungsrate insbesondere für den ersten Frequenzverlauf *f*₁ und den zweiten Frequenzverlauf *f*₂ identisch. Jedoch weisen im Gegensatz zu den Beispielen der Figuren 6A-6R der erste Frequenzverlauf *f*₁ und der zweite Frequenzverlauf *f*₂ keinen gemeinsamen Kreuzungspunkt auf.

**Gemäß der** Figur 7A beginnt der erste Frequenzverlauf *f*₁ mit der Resonanzfrequenz *f*₀. Der zweite Frequenzverlauf *f*₂ beginnt oberhalb der Resonanzfrequenz *f*₀.

Gemäß der Figur 7B ist die Situation gerade umgekehrt zu der Figur 7A, so dass der zweite Frequenzverlauf *f*₂ mit der Resonanzfrequenz *f*₀ beginnt und der erste Frequenzverlauf *f*₁ unterhalb der Resonanzfrequenz *f*₀.

Gemäß der Figur 7C beginnt weder der erste Frequenzverlauf *f*₁ noch der zweite Frequenzverlauf *f*₂ mit der Resonanzfrequenz *f*₀. Vielmehr beginnt der zweite Frequenzverlauf *f*₂ oberhalb der Resonanzfrequenz *f*₀ und der erste Frequenzverlauf *f*₁ unterhalb der Resonanzfrequenz *f*₀, wobei der erste Frequenzverlauf *f*₁ und der zweite Frequenzverlauf *f*₂ einen unterschiedlichen Abstand zur Resonanzfrequenz *f*₀ aufweisen. Selbstverständlich kann die Situation auch umgekehrt werden, so dass der Abstand des ersten Frequenzverlaufs *f*₁ kleiner ist zu der Resonanzfrequenz *f*₀ als der Abstand des zweiten Frequenzverlaufs *f*₂ zu der Resonanzfrequenz *f*₀.

In den Figuren 7D-7F ist das Vorzeichen im Vergleich zu den Figuren 7A-7C gerade umgekehrt. So weist der zweite Frequenzverlauf *f*₂ eine sinkende Frequenz auf, wohingegen der erste Frequenzverlauf *f*₁ eine steigende Frequenz aufweist.

Gemäß der Figur 7D endet der zweite Frequenzverlauf *f*₂ mit der Resonanzfrequenz *f*₀, wohingegen der erste Frequenzverlauf *f*₁ unterhalb der Resonanzfrequenz *f*₀ endet.

Gemäß der Figur 7E endet der zweite Frequenzverlauf *f*₂ oberhalb der Resonanzfrequenz *f*₀, wohingegen der erste Frequenzverlauf *f*₁ mit der Resonanzfrequenz *f*₀ endet.

Gemäß der Figur 7F endet der erste Frequenzverlauf *f*₁ unterhalb der Resonanzfrequenz *f*₀ und der zweite Frequenzverlauf *f*₂ oberhalb der **Resonanzfrequenz** *f*₀, wobei der Abstand des zweiten Frequenzverlaufs *f*₂ zu der Resonanzfrequenz *f*₀ größer ist als der Abstand des ersten Frequenzverlaufs *f*₁ zu der Resonanzfrequenz *f*₀. Selbstverständlich kann die Situation auch umgekehrt werden, so dass der Abstand des ersten Frequenzverlaufs *f*₁ größer ist zu der Resonanzfrequenz *f*₀ als der Abstand des zweiten Frequenzverlaufs *f*₂ zu der Resonanzfrequenz *f*₀.

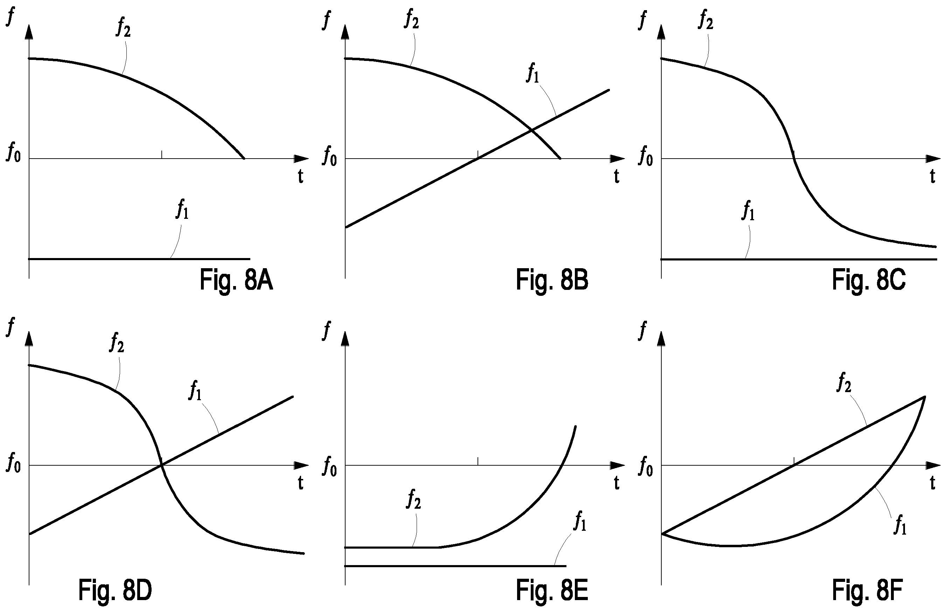

Nachfolgend wird Bezug genommen auf die Figuren 8A-8H. In den Beispielen der Figuren 8A-8H weist mindestens das erste Ultraschallsignal 18 und/oder das zweite Ultraschallsignal 22 einen nicht-linearen Chirp auf.

Gemäß der Figur 8A ist eine mit der Zeit steigende Frequenzänderungsrate dargestellt für den zweiten Frequenzverlauf *f*₂, wohingegen das erste Ultraschallsignal 18 eine konstante Frequenz *f*₁ aufweist. Hierbei sinkt die Frequenz des zweiten Ultraschallsignals 22 über die Zeit.

Gemäß der Figur 8B weist der erste Frequenzverlauf *f*₁ einen linearen Chirp auf, wohingegen der zweite Frequenzverlauf *f*₂ eine steigende Frequenzänderungsrate zeigt. Hierbei sinkt die Frequenz des zweiten Ultraschallsignals 22 über die Zeit.

In den Figuren 8C und 8D weist der zweite Frequenzverlauf *f*₂ einen komplexen Verlauf auf, welche in der Figur 8C mit einer konstanten Frequenz des ersten Frequenzverlaufs *f*₁ und in der Figur 8D mit einem linearen Chirp des ersten Frequenzverlaufs *f*₁ kombiniert wird.

Gemäß der Figur 8E weist der zweite Frequenzverlauf *f*₂ eine steigende Frequenzänderungsrate auf, wohingegen das erste Ultraschallsignal 18 eine konstante Frequenz *f*₁ aufweist. Hierbei steigt die Frequenz des zweiten Ultraschallsignals 22.

Gemäß der Figur 8F wird die steigende Frequenzänderungsrate des zweiten Frequenzverlaufs *f*₂ mit einem linearen Chirp des ersten Ultraschallsignals 18 kombiniert.

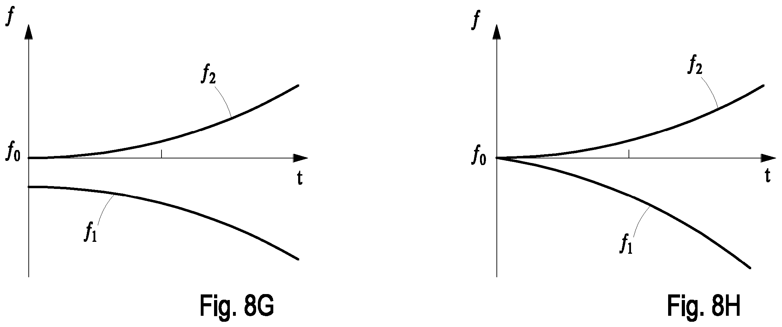

Gemäß der Figur 8G weist der erste Frequenzverlauf *f*₁ und der zweite Frequenzverlauf *f*₂ vom Absolutbetrag her gleiche Frequenzänderungsraten auf mit einer zunehmenden Änderung über die Zeit, jedoch mit entgegengesetzten Vorzeichen. Hierbei beginnt der zweite Frequenzverlauf *f*₂ mit der Resonanzfrequenz *f*₀ wohingegen der erste Frequenzverlauf *f*₁ unterhalb der Resonanzfrequenz *f*₀ beginnt.

Gemäß der Figur 8H beginnen sowohl der erste Frequenzverlauf *f*₁ als auch der zweite Frequenzverlauf *f*₂ mit der Resonanzfrequenz *f*₀, weisen jedoch unterschiedliche und entgegengesetzte Frequenzänderungsraten auf.

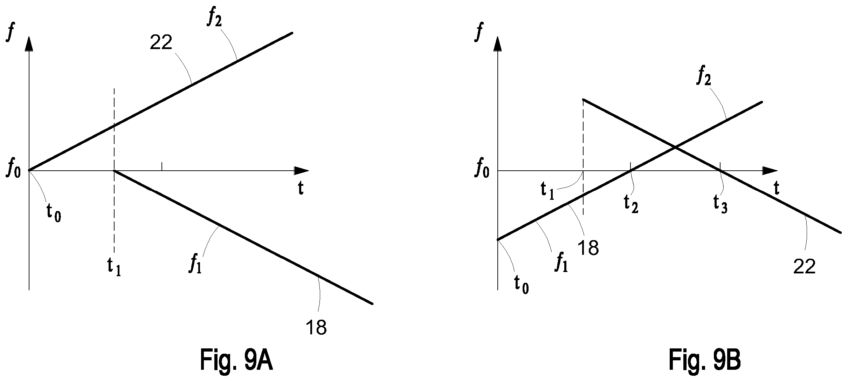

In den Figuren 9A und 9B ist gezeigt, dass das erste Ultraschallsignal 18 und das zweite Ultraschallsignal 22 keinen vollständigen zeitlichen Überlapp aufweisen müssen. So ist in der Figur 9A gezeigt, dass das zweite Ultraschallsignal 22 zum Zeitpunkt *t*₀ beginnt und erst zeitlich versetzt zum Zeitpunkt *t*₁ das erste Ultraschallsignal 18 beginnt. Hierbei beginnen sowohl das erste Ultraschallsignal als auch der zweite Frequenzverlauf *f*₂ jeweils mit der Resonanzfrequenz *f*₀ jedoch zu unterschiedlichen Zeiten *t*₀ und *t*₁. Gemäß der Figur 9B kreuzen sowohl der erste Frequenzverlauf *f*₁ und der zweite Frequenzverlauf *f*₂ die Resonanzfrequenz *f*₀ bei ihrer Mittelfrequenz jedoch zu unterschiedlichen Zeitpunkten *t*₂ und *t*₃. Dies wird erreicht, indem das erste Ultraschallsignal 18 zu einem Zeitpunkt *t*₁ beginnt, welcher nach dem Zeitpunkt *t*₀ liegt, zu dem das zweite Ultraschallsignal 22 beginnt.

Die Figuren 3A-9B zeigen lediglich exemplarisch Möglichkeiten zur Realisierung der vorliegenden Erfindung. Eine asymmetrische Verteilung des ersten Ultraschallsignals 18 und des zweiten Ultraschallsignals 22 mit ihrer Frequenz um die Resonanzfrequenz *f*₀ kann auf vielerlei Weisen erzeugt werden. Die Beispiele der Figuren 3A bis 9B sind dabei nicht vollständig. Weitere Beispiele und Möglichkeiten existieren zur Realisierung einer geeigneten Kombination der ersten Frequenz *f*₁ und der zweiten Frequenz *f*₂ bzw. der entsprechenden Frequenzverläufe *f*₁,*f*₂, so dass die Vorteile der vorliegenden Erfindung realisiert werden und gleichzeitig eine zuverlässige Detektion von Objekten in einem Fernbereich des Ultraschalltransducers und im Nahbereich des Ultraschalltransducers ermöglicht werden. Weiterhin können Ausführungsformen der einzelnen Figuren beliebig miteinander kombiniert werden, um zu weiteren Realisierungen der vorliegenden Erfindung zu gelangen.

## Patentansprüche

1. Verfahren zum Betrieb einer Ultraschallsensorvorrichtung, insbesondere für ein Kraftfahrzeug, mit
einem ersten Ultraschalltransducer und einem zweiten Ultraschalltransducer, wobei der erste Ultraschalltransducer und der zweite Ultraschalltransducer eine Resonanzfrequenz *f*₀ aufweisen,
wobei das Verfahren die Schritte umfasst:
Erzeugen und Aussenden eines ersten Ultraschallsignals mit einer ersten Frequenz *f*₁ für eine erste Zeitdauer mittels dem ersten Ultraschalltransducer und Erzeugen eines zweiten Ultraschallsignals mit einer zweiten Frequenz *f*₂ für eine zweite Zeitdauer mittels dem zweiten Ultraschalltransducer, wobei die erste Frequenz *f*₁ und die zweite Frequenz *f*₂ zumindest zu einem Zeitpunkt einen unterschiedlichen Frequenzabstand zu der Resonanzfrequenz *f*₀ aufweisen, und
Empfangen des ersten Ultraschallsignals, welches an einem Objekt in einem Erfassungsbereich der Ultraschallsensorvorrichtung reflektiert wird, durch den ersten Ultraschalltransducer und/oder den zweiten Ultraschalltransducer oder Empfangen des zweiten Ultraschallsignals, welches an einem Objekt in dem Erfassungsbereich der Ultraschallsensorvorrichtung reflektiert wird, durch den ersten Ultraschalltransducer und/oder den zweiten Ultraschalltransducer.

2. Verfahren nach Anspruch 1, wobei die erste Zeitdauer und die zweite Zeitdauer zumindest teilweise und insbesondere vollständig überlappen.

3. Verfahren nach Anspruch 1 oder 2, wobei der erste Ultraschalltransducer und der zweite Ultraschalltransducer dieselbe oder eine unterschiedliche Resonanzfrequenz *f*₀ aufweisen.

4. Verfahren nach einem der Ansprüche 1 bis 3, wobei die erste Frequenz *f*₁ und die zweite Frequenz *f*₂ zu jedem Zeitpunkt einen unterschiedlichen Frequenzabstand zu der Resonanzfrequenz *f*₀ aufweisen.

5. Verfahren nach einem der Ansprüche 1 bis 3, wobei die erste Frequenz *f*₁ und die zweite Frequenz *f*₂ bis auf einen zu jedem Zeitpunkt einen unterschiedlichen Frequenzabstand zu der Resonanzfrequenz *f*₀ aufweisen.

6. Verfahren nach einem der Ansprüche 1 bis 5, wobei durch das Ultraschallsignal mit der Frequenz mit dem größeren Abstand zu der Resonanzfrequenz *f*₀ Objekte im Nahbereich des Ultraschalltransducers und durch das Ultraschallsignal mit der Frequenz mit kleinerem Abstand zu der Resonanzfrequenz *f*₀ Objekte im Fernbereich des jeweiligen Ultraschalltransducers erfasst wird.

7. Verfahren nach einem der Ansprüche 1 bis 6, wobei die erste Frequenz *f*₁ und/oder die zweite Frequenz *f*₂ konstant sind für die jeweilige Zeitdauer.

8. Verfahren nach einem der Ansprüche 1 bis 6, wobei die erste Frequenz *f*₁ und/oder die zweite Frequenz *f*₂ veränderlich sind für die jeweilige Zeitdauer und insbesondere einen linearen oder nicht-linearen Chirp aufweisen.

9. Verfahren nach Anspruch 8, wobei die erste Frequenz *f*₁ und die zweite Frequenz *f*₂ einen linearen Chirp aufweisen mit einer entgegengesetzten oder gleichgerichteten Frequenzänderung.

10. Verfahren nach Anspruch 8 oder 9, wobei die erste Frequenz *f*₁ und die zweite Frequenz *f*₂ einen Kreuzungspunkt aufweisen, welcher insbesondere nicht mit der Resonanzfrequenz *f*₀ zusammenfällt.

11. Verfahren nach einem der Ansprüche 1 bis 10, wobei die erste Frequenz *f*₁ stets kleiner ist als die Resonanzfrequenz *f*₀ und/oder die zweite Frequenz *f*₂ stets größer ist als die Resonanzfrequenz *f*₀.

12. Verfahren nach einem der Ansprüche 1 bis 11, wobei die erste Frequenz *f*₁ und die zweite Frequenz *f*₂ innerhalb der Bandbreite von sowohl dem ersten Ultraschalltransducer als auch dem zweiten Ultraschalltransducer liegt.

13. Vorrichtung, insbesondere mikroelektronische Schaltung, zur Verbindung mit einem ersten Ultraschalltransducer und einem zweiten Ultraschalltransducer, wobei die Vorrichtung eine Speichereinheit aufweist und einen Prozessor, wobei die Speichereinheit Instruktionen speichert, die, wenn vom Prozessor ausgeführt, die Schritte des Verfahrens nach einem der Ansprüche 1 bis 12 ausführt.

14. Ultraschallsensorvorrichtung mit einer Vorrichtung nach Anspruch 13 und einem ersten Ultraschalltransducer und einem zweiten Ultraschalltransducer, welche mit der Vorrichtung verbunden sind.

15. Computerlesbares Speichermedium, umfassend Befehle, die bei der Ausführung durch einen Prozessor diesen veranlassen, das Verfahren nach einem der Ansprüche 1 bis 12 auszuführen.

## Geänderte Patentansprüche

### Geänderte Patentansprüche gemäss Regel 137(2) EPÜ.

1. Verfahren zum Betrieb einer Ultraschallsensorvorrichtung (10), insbesondere für ein Kraftfahrzeug, mit
einem ersten Ultraschalltransducer (12) und einem zweiten Ultraschalltransducer (14), wobei der erste Ultraschalltransducer (12) und der zweite Ultraschalltransducer (14) eine Resonanzfrequenz *f*₀ aufweisen,
wobei das Verfahren die Schritte umfasst:
Erzeugen und Aussenden eines ersten Ultraschallsignals (18) mit einer ersten Frequenz *f*₁ für eine erste Zeitdauer mittels dem ersten Ultraschalltransducer (12) und Erzeugen eines zweiten Ultraschallsignals (22) mit einer zweiten Frequenz *f*₂ für eine zweite Zeitdauer mittels dem zweiten Ultraschalltransducer (14), und
Empfangen des ersten Ultraschallsignals (18), welches an einem Objekt (20) in einem Erfassungsbereich der Ultraschallsensorvorrichtung (10) reflektiert wird, durch den ersten Ultraschalltransducer (12) und/oder den zweiten Ultraschalltransducer (14) oder Empfangen des zweiten Ultraschallsignals (22), welches an einem Objekt (20) in dem Erfassungsbereich der Ultraschallsensorvorrichtung (10) reflektiert wird, durch den ersten Ultraschalltransducer (12) und/oder den zweiten Ultraschalltransducer
**dadurch gekennzeichnet, dass**
die erste Frequenz *f*₁ und die zweite Frequenz *f*₂ zumindest zu einem Zeitpunkt einen unterschiedlichen Frequenzabstand zu der Resonanzfrequenz *f*₀ aufweisen; und
(i) die erste Frequenz *f*₁ und/oder die zweite Frequenz *f*₂ konstant sind für die jeweilige Zeitdauer oder (ii) die erste Frequenz *f*₁ und/oder die zweite Frequenz *f*₂ veränderlich sind für die jeweilige Zeitdauer und die erste Frequenz *f*₁ und die zweite Frequenz *f*₂ einen Kreuzungspunkt aufweisen oder (iii) die erste Frequenz *f*₁ und/oder die zweite Frequenz *f*₂ veränderlich sind für die jeweilige Zeitdauer und die erste Frequenz *f*₁ und/oder die zweite Frequenz *f*₂ zumindest zu einem Zeitpunkt gleich der Resonanzfrequenz *f*₀ ist oder (iv) die erste Frequenz *f*₁ und/oder die zweite Frequenz *f*₂ veränderlich sind für die jeweilige Zeitdauer und die Änderungsrate der ersten Frequenz *f*₁ und der zweiten Frequenz *f*₂ verschieden sind oder (v) die erste Frequenz *f*₁ und/oder die zweite Frequenz *f*₂ veränderlich sind für die jeweilige Zeitdauer und die erste Frequenz *f*₁ und die zweite Frequenz *f*₂ einen linearen Chirp aufweisen mit einer entgegengesetzten Frequenzänderung oder (vi) die erste Frequenz *f*₁ und/oder die zweite Frequenz *f*₂ veränderlich sind für die jeweilige Zeitdauer und die erste Frequenz *f*₁ und die zweite Frequenz *f*₂ einen nicht-linearen Chirp aufweisen.

2. Verfahren nach Anspruch 1, wobei die erste Zeitdauer und die zweite Zeitdauer zumindest teilweise und insbesondere vollständig überlappen.

3. Verfahren nach Anspruch 1 oder 2, wobei die erste Frequenz *f*₁ und die zweite Frequenz *f*₂ zu jedem Zeitpunkt einen unterschiedlichen Frequenzabstand zu der Resonanzfrequenz *f*₀ aufweisen.

4. Verfahren nach Anspruch 1 oder 2, wobei die erste Frequenz *f*₁ und die zweite Frequenz *f*₂ bis auf einen zu jedem Zeitpunkt einen unterschiedlichen Frequenzabstand zu der Resonanzfrequenz *f*₀ aufweisen.

5. Verfahren nach einem der Ansprüche 1 bis 4, wobei durch das Ultraschallsignal (18, 22) mit der Frequenz mit dem größeren Abstand zu der Resonanzfrequenz *f*₀ Objekte im Nahbereich des Ultraschalltransducers und durch das Ultraschallsignal (18, 22) mit der Frequenz mit kleinerem Abstand zu der Resonanzfrequenz *f*₀ Objekte im Fernbereich des jeweiligen Ultraschalltransducers erfasst wird.

6. Verfahren nach einem der Ansprüche 1 bis 5, wobei wenn die erste Frequenz *f*₁ und die zweite Frequenz *f*₂ einen Kreuzungspunkt aufweisen der Kreuzungspunkt nicht mit der Resonanzfrequenz *f*₀ zusammenfällt.

7. Verfahren nach einem der Ansprüche 1 bis 6, wobei die erste Frequenz *f*₁ und die zweite Frequenz *f*₂ innerhalb der Bandbreite von sowohl dem ersten Ultraschalltransducer (12) als auch dem zweiten Ultraschalltransducer (14) liegt.

8. Vorrichtung, insbesondere mikroelektronische Schaltung, zur Verbindung mit einem ersten Ultraschalltransducer (12) und einem zweiten Ultraschalltransducer (14), wobei die Vorrichtung eine Speichereinheit aufweist und einen Prozessor, wobei die Speichereinheit Instruktionen speichert, die, wenn vom Prozessor ausgeführt, die Schritte des Verfahrens nach einem der Ansprüche 1 bis 6 ausführt.

9. Ultraschallsensorvorrichtung (10) mit einer Vorrichtung nach Anspruch 8 und einem ersten Ultraschalltransducer (12) und einem zweiten Ultraschalltransducer (14), welche mit der Vorrichtung verbunden sind.

10. Computerlesbares Speichermedium, umfassend Befehle, die bei der Ausführung durch einen Prozessor diesen veranlassen, das Verfahren nach einem der Ansprüche 1 bis 6 auszuführen.
